Europäisches Patentamt

European Patent Office

Office européen des brevets

(19)

(11) Veröffentlichungsnummer: **0 469 417 A1**

# EUROPÄISCHE PATENTANMELDUNG

(12)

(21) Anmeldenummer: **91112174.7**

(22) Anmeldetag: **20.07.91**

(51) Int. Cl.5: **F15B 21/04**, F15B 1/06

(30) Priorität: **30.07.90 US 559746**

(43) Veröffentlichungstag der Anmeldung:
**05.02.92 Patentblatt 92/06**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Gage, Douglas Millard**
**5633 Constance Ct.**
**Dubuque, Iowa 52001(US)**
Erfinder: **Vize, Richard Joseph**
**10655 Breiner Drive**
**Dubuque, Iowa 52001(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Hydraulikkreislauf für ein Fahrzeug.**

(57) Bei einem Hydraulikkreislauf für ein Fahrzeug mit einer Pumpe, mindestens einem Verbraucher, einem Sammelbehälter (34), einer an die Pumpe angeschlossenen Saugleitung (40) und einer an den Verbraucher angeschlossenen Hauptrücklaufleitung (50) münden die freien offenen Enden der Saugleitung (40) und der Hauptrücklaufleitung (50) derart in den Sammelbehälter (34), daß Rücklaufflüssigkeit direkt in die Saugleitung (40) eingegeben wird.

FIG. 4

EP 0 469 417 A1

Die Erfindung bezieht sich auf einen Hydraulikkreislauf für ein Fahrzeug mit einer Pumpe, mindestens einem Verbraucher, einem Sammelbehälter, einer an die Pumpe angeschlossenen Saugleitung und einer an den Verbraucher angeschlossenen Hauptrücklaufleitung, wobei die freien offenen Enden der Saugleitung und der Hauptrücklaufleitung in den Sammelbehälter münden.

Selbstfahrende Arbeitsmaschinen, die für die Bau -, Forst- oder die Landwirtschaft konzipiert sind, weisen hydraulisch betätigbare Arbeitswerkzeuge auf. Die Arbeitswerkzeuge, wie Rückeschilder, Baggerlöffel, Greifer für Baumstämme, Geräteanschlußvorrichtungen usw, sind über Arbeitszylinder hoch- oder abschwenkbar, dreh- oder auch schwenkbar, um nur einige der möglichen Bewegungsarten aufzuzählen. Die Arbeitszylinder sind dazu in einem hydraulischen Kreislauf angeordnet und werden von einer Pumpe, deren Fördervolumen veränderlich ist oder auch nicht, druckbeaufschlagt. Die Pumpe saugt aus einem Sammelbehälter Flüssigkeit und von den Arbeitszylindern verdrängte Flüssigkeit gelangt in der Regel zurück in den Sammelbehälter. Leckflüssigkeit muß ebenfalls in den Sammelbehälter zurückgeführt werden. Der Sammelbehälter muß daher eine gewisse Größe aufweisen, um der Pumpe ausreichend viel Flüssigkeit zur Verfügung stellen zu können, und man geht in der Regel von einem Mindestfassungsvermögen von einem Drittel der Flüssigkeitsmenge aus, die in einer Minute durch die Pumpe gefördert wird. Steht der Sammelbehälter nicht unter Druck, sind in vielen Anwendungsbereichen noch zusätzliche Ladepumpen erforderlich.

Bei dem hydraulischen Kreislauf, von dem die Erfindung ausgeht (US-A-4 286 432), ist die Saugleitung von oben in den Sammelbehälter geführt, ebenso wie die Rücklaufleitung.

Die Pumpe saugt aus dem Flüssigkeitsreservoir im Sammelbehälter an und Rücklaufflüssigkeit ergießt sich in den Sammelbehälter. Hierzu muß der Sammelbehälter eine bestimmte Größe aufweisen. Die Flüssigkeit im Sammelbehälter wird ständig umhergewirbelt und ist dadurch mit Schmutzpartikeln durchsetzt.

Die mit der Erfindung zu lösende Aufgabe wird darin gesehen, den hydraulischen Kreislauf so weiter zu bilden, daß ein Sammelbehälter mit einem kleineren Fassungsvermögen verwendet werden kann. Diese Aufgabe ist dadurch gelöst, daß die freien Enden der Hauptrücklaufleitung und der Saugleitung in dem Sammelbehälter derart angeordnet sind, daß Rücklaufflüssigkeit direkt in die Saugleitung eingegeben wird. Auf diese Weise entsteht im Bereich des Einlasses der Saugleitung bei normalen Witterungsbedingungen ein positiver Druck und bei kalten Temperaturen ermöglicht diese Anordnung, daß sich die Flüssigkeit am Saugleitungseinlaß leicht löst, wodurch weniger Vakuum Erscheinungen auftreten. Die Flüssigkeit im Sammelbehälter wird nicht mehr so stark umhergewirbelt und Schmutzpartikel können sich auf dem Boden des Sammelbehälters absetzen. Das Fassungsvermögen des Sammelbehälters kann erheblich kleiner als bisher sein.

Nach einem weiteren Vorschlag der Erfindung ist vorgesehen, daß die freien Enden der Hauptrücklaufleitung und der Saugleitung zueinander ausgerichtet sind und zwischen sich einen Einlaufspalt für sich im Sammelbehälter befindliche Flüssigkeit bilden. Damit kann die Pumpe bei Bedarf in einfacher Weise auch aus dem Sammelbehälter zusätzliche Flüssigkeit ansaugen.

Eine besonders zweckmäßige Anordnung wird dann erreicht, wenn das freie Ende der Hauptrücklaufleitung in das freie Ende der Saugleitung hineinragend angeordnet ist.

Das Eintreten von Schmutzpartikeln in die Saugleitung wird zumindest erschwert, wenn das freie Ende der Saugleitung in dem Sammelbehälter nach oben zeigend angeordnet ist und Abstand zur Bodenwand des Sammelbehälters aufweist. Ein in der Saugleitung vorgesehener Filter hat damit eine größere Lebensdauer.

Vorteilhaft kann das freie Ende der Saugleitung als rundes Einlaßrohr ausgebildet sein und sich nach außen erweitern.

Eine düsenartige Wirkung ist erzielbar, wenn das freie Ende der Hauptrücklaufleitung als rundes Auslaßrohr ausgebildet ist, dessen Durchmesser kleiner ist als der des erweiterten Teils des Einlaßrohres. Die Flüssigkeit wird dann in die Saugleitung eingespritzt und auf eine gesonderte Ladepumpe kann verzichtet werden, auch dann wenn der Sammelbehälter, der allseits geschlossen ist, nicht unter Druck steht. Der Sammelbehälter kann bei geschlossener Bauweise zweckmäßig ein Atmungsrohr aufweisen.

In einfacher Weise kann das Einlaßrohr sich durch die Bodenwand in den Sammelbehälter erstrecken. Es weist damit Abstand zum Boden auf und Schmutzpartikel, die sich auf dem Boden des Sammelbehälters abgelagert haben, werden weit weniger miteingesaugt.

Schließlich kann noch vorgesehen werden, daß in den Sammelbehälter zwei miteinander und mit der Pumpe verbundene Drainageleitungen führen, wobei in einer Drainageleitung ein Kühler und in der anderen Drainageleitung ein Überdruckventil vorgesehen ist. Hierdurch wird erreicht, daß bei normalen Temperaturen die Leckflüssigkeit gekühlt in den Sammelbehälter gelangt. Bei kalten Temperaturen öffnet das Überdruckventil und der Kühler wird umgangen.

In der Zeichnung ist ein nachfolgend näher erläutertes

Ausführungsbeispiel der Erfindung dargestellt. Es zeigt:

Fig. 1 eine Forstmaschine in Seitenansicht,

Fig. 2 einen ersten hydraulischen Kreislauf für die Forstmaschine, aufgeteilt in Fig. 2a und 2b,

Fig. 3 einen zweiten hydraulischen Kreislauf für die Forstmaschine,

Fig. 4 einen Sammelbehälter für hydraulische Flüssigkeit in Seitenansicht für den Kreislauf nach Fig. 2 und

Fig. 5 den Sammelbehälter nach Fig. 4 in Vorderansicht.

## Die Forstmaschine

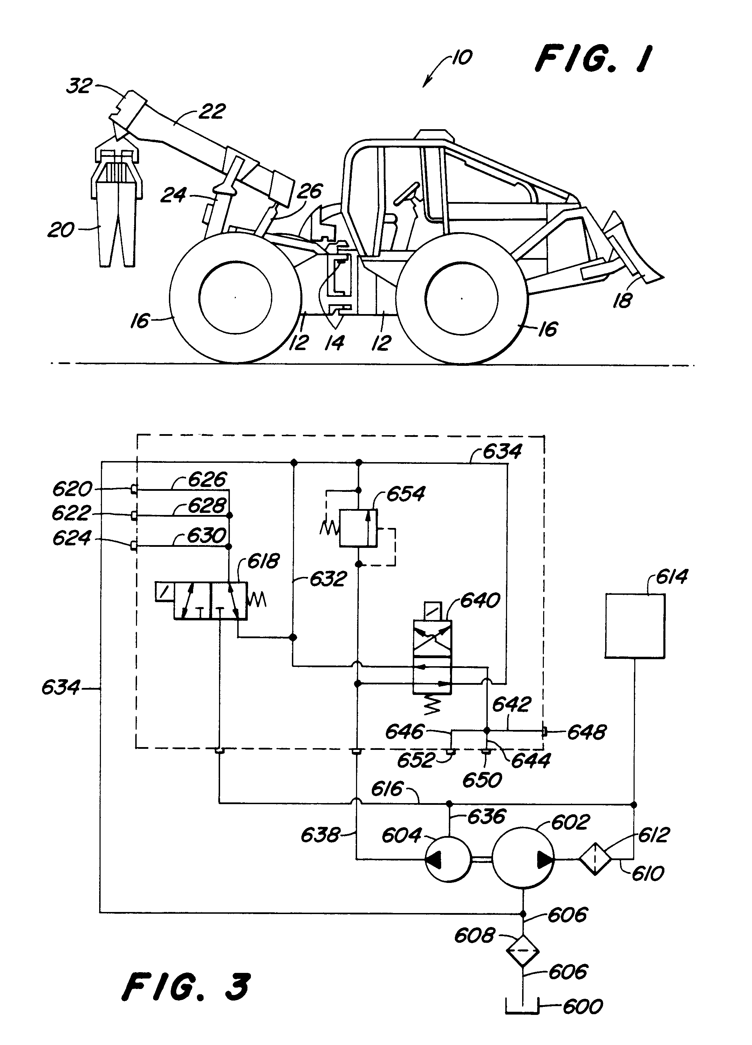

Fig. 1 zeigt eine Forstmaschine 10 mit einer Vorrichtung zum Aufnehmen von gefällten und in der Regel entästeten Baumstämmen im Forstbetrieb, an der die Erfindung besonders gut anwendbar ist. Die Anwendung der Erfindung ist jedoch nicht auf Forstmaschinen begrenzt, da die Erfindung grundsätzlich bei allen hydraulischen Kreisläufen eingesetzt werden kann.

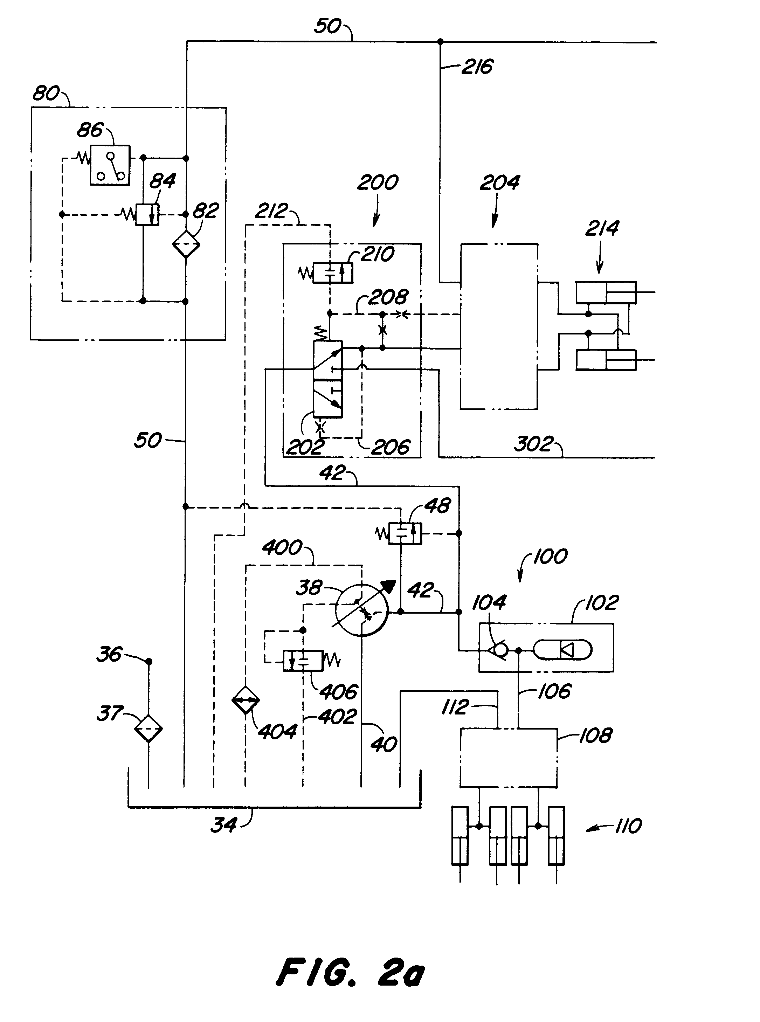

Die in Fig. 1 gezeigte Forstmaschine 10 weist einen Rahmen 12 mit Knicklenkung auf, wozu vertikale Zapfen 14 vorgesehen sind. Um diese Zapfen 14 kann der vordere Teil der Forstmaschine gegenüber seinem rückwärtigen Teil beim Wenden oder Lenken einknicken. Die Räder der Forstmaschine sind mit 16 bezeichnet und können alle antreibbar sein. Ein Rückeschild 18 ist frontseitig höhenverschwenkbar am vorderen Teil der Forstmaschine vorgesehen und über hydraulisch beaufschlagbare Zylinder 19 verstellbar. Ein Greifer 20 mit sich gegenüberliegenden Greifarmen zum Erfassen der Baumstämme ist am rückwärtigen Teil der Forstmaschine angeordnet. Er ist höhenverstellbar und schwenkbar, wozu ein Ausleger 22 und ein den Ausleger 22 aufnehmender Greiferbogen 24 dienen. Ausleger 22 und Greiferbogen 24 sind auf dem rückwärtigen Teil der Forstmaschine angeordnet und über hydraulisch beaufschlagbare Zylinder 26 und 28 verstellbar. Die beiden Greifarme des Greifers 20 können über einen einzigen doppelseitig beaufschlagbaren Zylinder 30 geöffnet und geschlossen werden. In Fig. 1 der Zeichnung ist nur einer der vorgenannten Zylinder, und zwar der Zylinder 26, und ein Drehzylinder 32 eingezeichnet. Alle Zylinder 19, 26, 28, 30 und 32 sind jedoch im Teil b der Fig. 2 erkennbar. Der Drehzylinder 32 ist am rückwärtigen oberen Ende des Auslegers 22 vorgesehen und dient zum Drehen des Greifers 20 um eine vertikale Achse. Er kann auch innerhalb des Auslegers 22 angeordnet werden.

## Der erste hydraulische Kreislauf

Fig. 2a zeigt einen Sammelbehälter 34, in den hydraulische Flüssigkeit über einen Einlaß 36 eingefüllt werden kann. Der Einlaß ist noch zu Reinigungszwecken mit einem Rohrsieb 37 ausgerüstet. Eine Pumpe 38 mit veränderlicher Fördermenge kann Hydraulikflüssigkeit aus dem Sammelbehälter 34 über eine Saugleitung 40 ansaugen und in eine Druckleitung 42 drücken. Von der Druckleitung 42 aus gelangt unter Druck stehende Flüssigkeit in einen Kreislauf 100 für die Bremsen und in einen Prioritätskreislauf 200. Ein Überdruckventil 48 ist ebenfalls an die Druckleitung 42 angeschlossen, über das unter Druck stehende Flüssigkeit zurück in den Sammelbehälter 34 über eine Hauptrücklaufleitung 50 gelangen kann.

Der Kreislauf 100 für die Bremsen ist konventioneller Bauart und ähnlich demjenigen, der in dem Dokument US-A-4 898 078 offenbart ist, auf das ausdrücklich Bezug genommen wird. Aus der Druckleitung gelangt unter Druck stehende Flüssigkeit in dem Kreislauf 100 in einen Akkumulator 102, der mit einem Rückschlagventil 104 ausgerüstet ist. Das Rückschlagventil 104 ist so angeordnet, daß es einen Druckabfall im Steuerkreis 100 verhindert, wenn die Pumpe 38 abgeschaltet ist. Über eine Speiseleitung 106 steht der Akkumulator 102 mit einem Steuerventil 108 in Verbindung, über das Bremszylinder 110 steuerbar sind. Rücklauföl gelangt über eine an das Steuerventil 108 angeschlossene Rücklaufleitung 112 zurück in den Sammelbehälter 34.

Der Prioritätskreislauf 200 ist ebenfalls herkömmlicher Bauart und im wesentlichen identisch mit dem im Dokument US-A-4 898 078 beschriebenen Prioritätskreislauf. Er dient zum Speisen eines Steuerkreises für die Lenkung und eines Steuerkreises für die Arbeitszylinder bzw. für die Arbeitswerkzeuge. Die Priorität ist dem Steuerkreis für die Lenkung zugeordnet und der Steuerkreis für die Arbeitszylinder wird automatisch in Abhängigkeit vom Flüssigkeitsbedarf im Steuerkreis für die Lenkung abgeschaltet. Zu den Ventilen im Prioritätssteuerkreis gehört ein unter Federwirkung stehendes Zweiwegesteuerventil 202, das wahlweise den Fluß der unter Druck stehenden Flüssigkeit zwischen dem Steuerkreis 204 für die Lenkung und einer Steuerventilbank 300 steuert. Das Steuerventil 202 ist hydraulisch ausbalanciert, wozu Sensorleitungen 206 und 208 dienen. Gleichfalls ist im Prioritätskreislauf noch ein Überdruckventil 210 vorgesehen, über das, wenn es geöffnet ist, Flüssigkeit über eine Rücklaufleitung 212 in den Sammelbehälter 34 gelangen kann.

Auch der Steuerkreis 204 für die Lenkung ist herkömmlicher Bauweise und demjenigen im Dokument US-A-4 898 078 offenbarten ähnlich, wenn auch nicht identisch. Der Steuerkreis für die Lenkung ist mit einem nicht dargestellten Steuerventil und einer Dosiereinrichtung für die Flüssigkeit ausgerüstet, über die der Zufluß von unter Druck stehender Flüssigkeit zu Lenkzylindern 214 gesteuert wird. Kreuzweise miteinander verbundene und nicht dargestellte Überdruckventile sind ebenfalls vorgesehen, und Rücklauföl kann über eine an die Hauptrücklaufleitung 50 angeschlossene Rücklaufleitung 216 in den Sammelbehälter 34 zurückgeführt werden.

An das Zweiwegesteuerventil 202 im Prioritätskreislauf ist eine Speiseleitung 302 für die Steuerventilbank 300 (Fig. 2b) angeschlossen, über die Druckflüssigkeit zu den Arbeitszylindern 19, 26, 28, 30 und 32 gelangen kann, wenn der Steuerkreis für die Lenkung nicht seine Priorität beansprucht. Die Steuerventilbank 300 weist im einzelnen fünf manuell stellbare Steuerventile 304, 306, 308, 310 und 312 auf. Hierbei dient das erste Steuerventil 304 zum Stellen des Rückeschildes 18 über zwei Zylinder 19. Es ist als Dreistellungsvierwegeventil ausgebildet und mit der Speiseleitung 302 über eine Leitung 314 verbunden, die ein Rückschlagventil 316 aufweist. Von dem Steuerventil 304 kann dann je nach seiner Stellung Druckflüssigkeit über zwei Leitungen 318 zu den beiden doppelseitig beaufschlagbaren Zylindern 19 gelangen. Je nachdem welche Seite der Zylinder 19 beaufschlagt wird, dient eine Leitung einmal als Zuführleitung und einmal als Rücklaufleitung. Jede Leitung 318 ist mit einem eigenen Überdruckventil 320 versehen, über die im Bedarfsfall unter Druck stehende Flüssigkeit in die Hauptrücklaufleitung 50 strömen kann.

Die Steuerventile 306 und 308 entsprechen in ihrem Aufbau dem Steuerventil 304 und die zugehörigen Leitungen und Ventile sind deshalb mit identischen Bezugszeichen versehen. Das Steuerventil 306 dient zum Stellen des Auslegers 22 über zwei doppelseitig beaufschlagbare Zylinder 26 und das Steuerventil 308 zum Stellen des Greiferbogens 24 über zwei doppelseitig beaufschlagbare Zylinder 28.

Das Steuerventil 310 hat eine Stellung 324 mehr, ist aber ansonsten so ausgebildet, wie die Steuerventile 304 bis 306. Es dient zum Stellen eines doppelseitig beaufschlagbaren Zylinders 30 für die Greifarme des Greifers 20. Die zusätzliche Stellung 324 dient dazu, die Greifarme in einer blockierten Stellung zu halten.

Das Steuerventil 312 steuert die Drehbewegung des Drehzylinders 32 für den Greifer 20. Seine Wirkungsweise ist in der europäischen Patentanmeldung 90121110 offenbart, auf die Bezug genommen wird.

Aus dem Teil a der Fig. 2 ist noch ersichtlich, daß der Hauptrücklaufleitung 50 eine Filtereinheit 80 zugeordnet ist. Diese weist einen Filter 82, ein hydraulisch ausbalanciertes Überdruckventil 84 und einen elektrischen Schalter 86 auf. Bevor Rücklauföl in den Sammelbehälter 34 gelangt, wird es normalerweise durch den Filter 82 gereinigt. Schmutzpartikel sammeln sich dann in dem Filter 82 an, die einen Druckabfall bewirken. Hat der Druckabfall eine bestimmte Größe erreicht, wird durch die hydraulische Verknüpfung der elektrische Schalter 86 geschlossen und in der Fahrerkabine der Forstmaschine leuchtet ein Warnlicht auf, das die Bedienungsperson darauf aufmerksam machen soll, daß der Filter 82 zu reinigen oder zu erneuern ist. Wird der Druckabfall noch größer (beispielsweise bei Verstopfung), dann öffnet das Überdruckventil 84 und das Rücklauföl umgeht den Filter 82.

Kühlung der hydraulischen Flüssigkeit

Die Pumpe 38 ist noch mit zwei Drainageleitungen 400 und 402 versehen, wobei in der ersten Drainageleitung 400 ein Kühler 404 für die hydraulische Flüssigkeit vorgesehen ist. Die zweite Drainageleitung 402 weist ein Überdruckventil 406 auf. Beide Drainageleitungen sind im Pumpenbereich miteinander verbunden und bis in den Sammelbehälter 34 geführt, so daß Leckflüssigkeit aus der Pumpe 38 über beide Drainageleitungen in den Sammelbehälter gelangen kann. Bei kalten Witterungsbedingungen wird das Lecköl das normalerweise geschlossene Überdruckventil 406 öffnen, so daß es über die Drainageleitung 402 in den Sammelbehälter 34 gelangen kann. Bei wärmeren Witterungsbedingungen wird das Lecköl normalerweise durch den Kühler 404 zurückfließen, da infolge des Wechsels der Viskosität bei wärmerem Öl der Druckabfall geringer ist.

Aufbau des Sammelbehälters

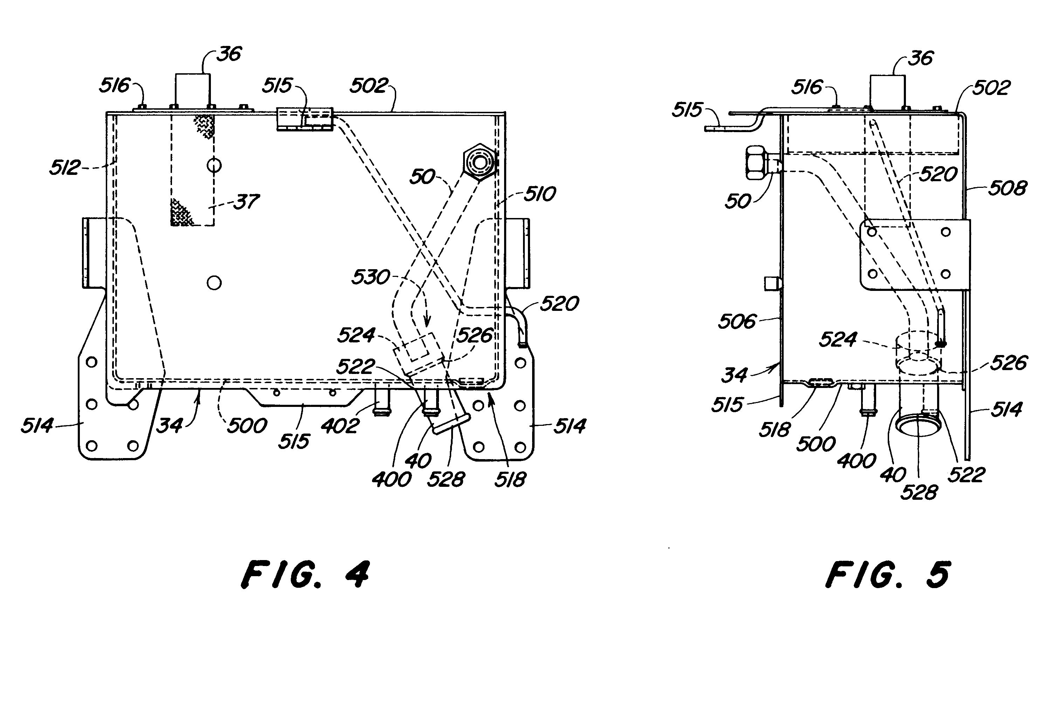

Der Aufbau des Sammelbehälters 34 ist in den Fig. 4 und 5 veranschaulicht. Der Sammelbehälter 34 ist rundum geschlossen und mit einer Bodenwand 500, einer Oberwand 502, zwei Seitenwänden 506 und 508 und einer Vorder- und Rückwand 510 und 512 versehen. Laschen 514 sind an der Seitenwand 508 vorgesehen, um den Sammelbehälter 34 mit dem Rahmen der Forstmaschine verbinden zu können. Zusätzliche Halteteile 515 sind vorgesehen, um die verschiedensten Teile befestigen zu können. Der Einlaß 36 ist mit der Oberwand 502 über Schrauben 516 verbunden. In den Sammelbehälter hinein erstreckt sich das Rohrsieb 37 und in der Bodenwand 500 ist noch ein Ölablaß 518 vorgesehen.

Da der Sammelbehälter 34 als druckloser Sammelbehälter ausgebildet ist, ist er mit einem Atmungsrohr 520 versehen. Die Saugleitung 40 ragt von unten durch die Bodenwand 500 in den Sammelbehälter und ist hierzu mit einem Einlaßrohr 522 ausgerüstet, das zylindrisch ausgebildet ist und im Inneren des Sammelbehälters mit einem oberen Teil 524 en det, der einen etwas größeren Durchmesser als der restliche Teil des Einlaßrohres aufweist. Das Einlaßrohr ist dazu bei 526 nach außen erweitert. Das aus den Sammelbehälter 34 nach unten vorstehende Ende des Einlaßrohres 522 ist mit einem Dichtungsring 528 versehen. Gleichfalls ragen durch die Bodenwand 500 die Enden der beiden Drainageleitungen 400 und 402.

Das Ende der Hauptrückführleitung 50 ragt durch die Seitenwand 506 in das Innere des Sammelbehälters 34 und von dort nach unten bis in den oberen Teil 524 des Einlaßrohres 522. Das Ende der Hauptrückführleitung ist hierzu mit einem Endrohr versehen, das einen kleineren Durchmesser als der aufgeweitete obere Teil des Einlaßrohres 522 aufweist. Das Endrohr ist koaxial zu dem Einlaßrohr 522 ausgerichtet, so daß um das Endrohr herum im Einlaßrohr ein ringförmiger Freiraum 530 entsteht. Auf diese Weise wird das Rücklauföl unmittelbar in das Einlaßrohr 522 eingespritzt und es entsteht im Eintrittsbereich ein positiver Druck. Durch den ringförmigen Freiraum 530 kann bei Bedarf sich im Sammelbehälter befindliche Flüssigkeit in das Einlaßrohr gesaugt werden.

### Der zweite hydraulische Kreislauf

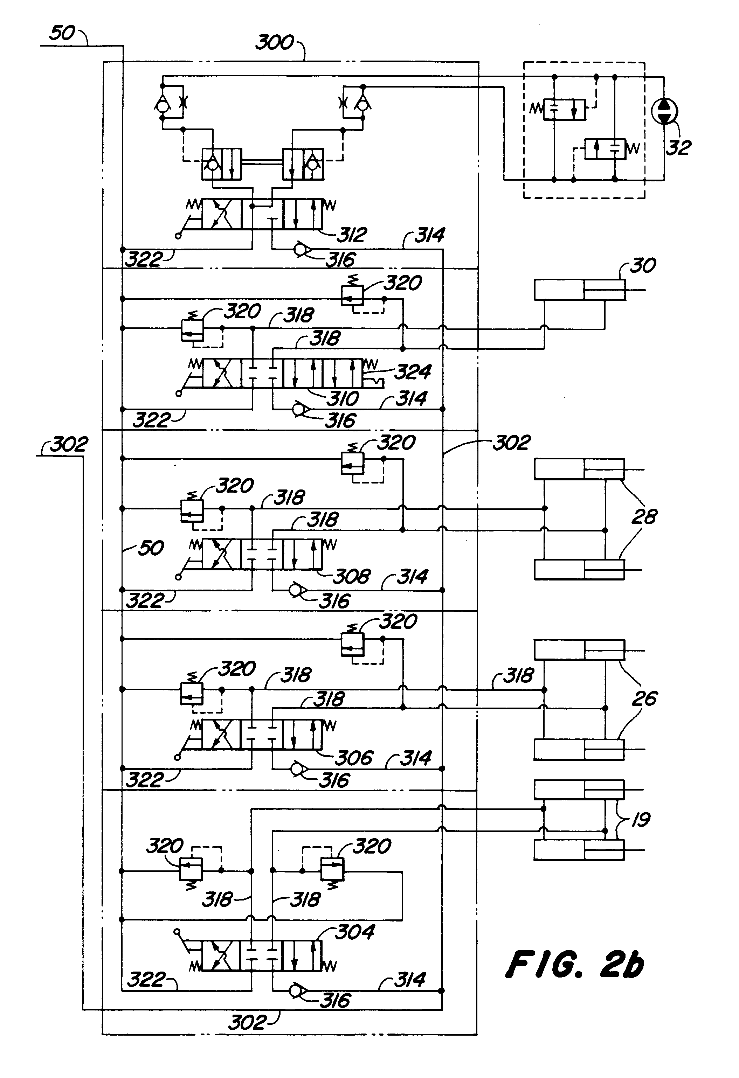

Der zweite hydraulische Kreislauf ist in Fig. 3 dargestellt. Er weist einen Sammelbehälter 600 auf, der Flüssigkeit für eine Pumpe 602 für ein Getriebe und eine Pumpe 604 für eine Differentialsperre bereitstellt. Die Pumpe 602 saugt Flüssigkeit aus dem Sammelbehälter 600 über eine Saugleitung 606 an, in der noch ein Filtersieb 608 angeordnet ist. Die Pumpe 602 drückt unter Druck stehende Flüssigkeit über eine Speiseleitung 610 und einen Filter 612 zu einem hydraulisch schaltbaren Getriebe 614.

Von der Speiseleitung 610 zweigt eine Speiseleitung 616 zu einem Steuerventil 618 für eine Parkbremse ab, die über Federwirkung in ihre Bremsstellung gelangt. Beim Anlegen eines hydraulischen Druckes an die Parkbremse wird die Federwirkung überwunden und die Parkbremse gelöst. Hierzu genügt ein einfach wirkender hydraulisch beaufschlagbarer Zylinder. Das Steuerventil 618 wird über einen elektrischen Kreis magnetgesteuert und ist in Fig. 3 in einer Stellung wiedergegeben, in der die Parkbremse angelegt ist. In dieser Stellung blockiert das Steuerventil 618 einen Durchfluß von Druckflüssigkeit.

Wurde aber das Steuerventil 618 in eine Stellung verstellt, in der es einen Flüssigkeitsdurchfluß erlaubt, dann gelangt unter Druck stehende Flüssigkeit zu Steueröffnungen 620, 622 und 624 über Leitungen 626, 628 und 630. Hierbei ist die Steueröffnung 620 eine Messöffnung, um den Druck in den Leitungen 626, 628 und 630 zu prüfen. Die Steueröffnung 622 dient zum Betätigen (Öffnen) eines elektrischen Kreises bzw. eines Schalters, damit die Bedienungsperson über eine Kontrolleuchte auf die angelegte Parkbremse aufmerksam wird. Die Steueröffnung 624 schließlich ist mit dem einfach wirkenden Zylinder für die Parkbremse verbunden, die gelöst wird, wenn der Zylinder druckbeaufschlagt ist.

In der in Fig. 3 wiedergegebenen Stellung des Steuerventils 618 kann die Flüssigkeit über Leitungen 632 und 634 zu dem Einlaß der Pumpe 606 zurückströmen. Sie wird nicht in den Sammelbehälter zurückgeführt.

Die Pumpe 604 saugt ihre Flüssigkeit über eine Leitung 636 aus der Leitung 616 an. Die Pumpe 604 erhält damit bereits unter Druck stehende Flüssigkeit, die darüberhinaus bereits durch den Filter 612 gereinigt wurde. Von der Pumpe 604 gelangt unter Druck stehende Flüssigkeit über eine Leitung 638 zu einem Steuerventil 640 für die Differentialsperre.

Auch das Steuerventil 640 ist magnetgesteuert und wird über einen Schalter in der Fahrerkabine verstellt. In der in Fig. 3 wiedergegebenen Stellung ist das Steuerventil 640 nicht aktiviert und Druckflüssigkeit strömt durch das Steuerventil 640 in die Leitung 634 zurück zum Einlaß der Pumpe 602 bzw. zur Saugleitung 606.

Schließt die Bedienungsperson den für die Differentialsperre vorgesehenen Schalter, dann wird das Steuerventil 640 derart verstellt, daß unter Druck stehende Flüssigkeit über Leitungen 642, 644 und 646 zu Steueröffnungen 648, 650 und 652 gelangt. Die Steueröffnung 648 ist eine Testöffnung für den Flüssigkeitsdruck in den Leitungen 642 bis 648. Die Steueröffnungen 650 und 652 führen zu Zylindern, über die ein vorderes und ein rückwärtiges Differential bei angelegtem Druck gesperrt werden können. Auch diese Zylinder sind als einfach wirkende Zylinder ausgebildet. Über ein Überdruckventil 654 wird in der Leitung 638 der erforderliche Betriebsdruck aufrechterhalten. In der in Fig. 3 gezeigten Stellung des Steuerventils 640 sind die Steueröffnungen 648 bis 652 mit der Leitung 632 und damit mit der Saugleitung 606 verbunden.

### Patentansprüche

1. Hydraulikkreislauf für ein Fahrzeug mit einer Pumpe (38), mindestens einem Verbraucher, einem Sammelbehälter (34), einer an die Pumpe (38) angeschlossenen Saugleitung (40) und einer an den Verbraucher angeschlossenen Hauptrücklaufleitung (50), wobei die freien offenen Enden der Saugleitung (40) und der Hauptrücklaufleitung (50) in den Sammelbehälter (34) münden, dadurch gekennzeichnet, daß die freien Enden der Hauptrücklaufleitung (50) und der Saugleitung (40) in dem Sammelbehälter (34) derart angeordnet sind, daß Rücklaufflüssigkeit direkt in die Saugleitung (40) eingegeben wird.

2. Hydraulikkreislauf nach Anspruch 1, dadurch gekennzeichnet, daß die freien Enden der Hauptrücklaufleitung (50) und der Saugleitung zueinander ausgerichtet sind und zwischen sich einen Einlaufspalt für sich im Sammelbehälter (34) befindliche Flüssigkeit bilden.

3. Hydraulikkreislauf nach Anspruch 2, dadurch gekennzeichnet, daß das freie Ende der Hauptrücklaufleitung (50) in das freie Ende der Saugleitung (40) hineinragend angeordnet ist.

4. Hydraulikkreislauf nach einem oder mehreren der vorherigen Ansprüche, dadurch gekennzeichnet, daß das freie Ende der Saugleitung (40) in dem Sammelbehälter (34) nach oben zeigend angeordnet ist und Abstand zur Bodenwand (500) des Sammelbehälters aufweist.

5. Hydraulikkreislauf nach einem oder mehreren der vorherigen Ansprüche, dadurch gekennzeichnet, daß das freie Ende der Saugleitung (40) als rundes Einlaßrohr (522) ausgebildet ist und sich nach außen erweitert.

6. Hydraulikkreislauf nach Anspruch 3 und 5, dadurch gekennzeichnet, daß das freie Ende der Hauptrücklaufleitung (50) als rundes Auslaßrohr ausgebildet ist, dessen Durchmesser kleiner ist als der des erweiterten Teils des Einlaßrohres (522).

7. Hydraulikkreislauf nach Anspruch 5, dadurch gekennzeichnet, daß das Einlaßrohr (522) sich durch die Bodenwand (500) in den Sammelbehälter (34) erstreckt.

8. Hydraulikkreislauf nach einem oder mehreren der vorherigen Ansprüche, dadurch gekennzeichnet, daß in den Sammelbehälter (34) zwei miteinander und mit der Pumpe (38) verbundene Drainageleitungen (400, 402) führen, wobei in einer Drainageleitung (400) ein Kühler (404) und in der anderen Drainageleitung (402) ein Überdruckventil (406) vorgesehen ist.

FIG. 1

FIG. 3

7

**FIG. 2a**

FIG. 2b

**FIG. 4**

**FIG. 5**

EP 0 469 417 A1

**Europäisches Patentamt**

# EUROPÄISCHER RECHERCHENBERICHT

Nummer der Anmeldung

## EP 91 11 2174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 203 287 (BENNETT)<br>* das ganze Dokument * * <br>– – – | 1-7 | F 15 B 21/04<br>F 15 B 1/06 |
| X | US-A-2 962 863 (CAROLI)<br>* das ganze Dokument * * <br>– – – | 1-7 | |
| A | FR-A-1 231 900 (ZF)<br>– – – | | |
| A | FR-A-940 929 (VICKERS)<br>– – – | | |
| A | US-A-3 002 355 (BRACKIN)<br>– – – | | |
| A | US-A-2 767 736 (LACKINGER)<br>– – – | | |
| A | US-A-2 588 788 (TIBEAU)<br>– – – | | |
| A | US-A-2 316 729 (TRYON)<br>– – – | | |
| A | US-A-2 251 664 (DAVIS)<br>– – – – – | | |

**RECHERCHIERTE SACHGEBIETE (Int. Cl.5)**

F 15 B
F 16 N

Der vorliegende Recherchenbericht wurde für alle Patentansprüche erstellt

| Recherchenort | Abschlußdatum der Recherche | Prüfer |
|---|---|---|
| Den Haag | 24 Oktober 91 | KNOPS J. |